# EUROPÄISCHE PATENTSCHRIFT

(11) **EP 3 991 268 B1**
(45) Veröffentlichungstag und Bekanntmachung des Hinweises auf die Patenterteilung: **05.11.2025**
(21) Anmeldenummer: 20717588.6
(22) Anmeldetag: 31.03.2020
(51) Int. Cl.: H02J 9/06

(54) **VERFAHREN ZUM BETRIEB EINER NETZERSATZANLAGE SOWIE NETZERSATZANLAGE**
METHOD FOR OPERATING A STANDBY POWER SUPPLY SYSTEM AND STANDBY POWER SUPPLY SYSTEM
PROCÉDÉ DE FONCTIONNEMENT D'UNE INSTALLATION DE REMPLACEMENT DE RÉSEAU AINSI QU'INSTALLATION DE REMPLACEMENT DE RÉSEAU

(30) Priorität: 25.06.2019 DE 102019117008
(43) Veröffentlichungstag der Anmeldung: 04.05.2022
(73) Patentinhaber: Westnetz GmbH, 44139 Dortmund (DE)
(72) Erfinder: KEMPEN, Elmar, 59823 Arnsberg (DE)
(74) Vertreter: Cohausz & Florack
(86) Internationale Anmeldenummer: PCT/EP2020/059122
(87) Internationale Veröffentlichungsnummer: WO 2020/259885

(56) Entgegenhaltungen:
- WO-A1-2007/097316
- DE-A1- 10 160 556
- DE-A1- 102008 020 356
- DE-A1- 102008 045 355
- DE-U1- 202004 020 318

## Beschreibung

Die Erfindung betrifft ein Verfahren zum Betrieb einer Netzersatzanlage zum Bereitstellen einer Notstromversorgung bei Ausfall der allgemeinen Stromversorgung, wobei die Netzersatzanlage einen Stromsensor zum Erfassen eines Ausfalls der allgemeinen Stromversorgung, einen Erdgasanschluss zum Anschluss an eine Erdgasleitung, einen mit dem Erdgasanschluss verbundenen Reformer zur Reformierung von Erdgas, eine mit dem Reformer verbundene Brennstoffzelle zur elektrochemischen Umsetzung von Wasserstoff aus dem im Reformer reformierten Erdgas und einen mit der Brennstoffzelle verbundenen Wechselrichter zum Bereitstellen einer Wechselspannung in einem mit Notstrom zu versorgenden elektrischen Stromkreis. Ferner betrifft die Erfindung eine Netzersatzanlage zum Bereitstellen einer Notstromversorgung bei Ausfall der allgemeinen Stromversorgung und eine Erdgas-Druckregel- und Messanlage mit einer Netzersatzanlage zum Bereitstellen einer Notstromversorgung.

Unter einer Notstromversorgung versteht man eine Einrichtung zur Versorgung von Verbrauchern mit Strom, wenn die Stromversorgung über das allgemeine Stromnetz ausfällt. Es handelt sich dann um einen sogenannten Schwarzfall oder Krisenfall. Bei entsprechenden Ereignissen müssen einige wichtige Anlagen weiterbetrieben werden, um wichtige Funktionen dieser Anlagen aufrechterhalten zu können. Dies gilt insbesondere für Versorger, die beispielsweise eine Versorgung der Abnehmer mit Erdgas aus einem Erdgasnetz oder dergleichen aufrechterhalten müssen. Alternativ oder zusätzlich müssen bestimmte Anlagen betrieben werden können, um die allgemeine Stromversorgung wiederherstellen zu können.

Bei einem plötzlichen Spannungsabfall übernehmen typischerweise sogenannte Unterbrechungsfreie Stromversorgungen (USV) die Aufrechterhaltung der Spannung in einem vorgegebenen Stromkreis, wozu diese USVs typischerweise Akkumulatoren/Batterien entsprechender Stromstärke aufweisen. Diese Akkumulatoren/Batterien sind dabei jedoch meist so ausgelegt, dass sie einen Stromausfall nur für maximal wenige Stunden überbrücken können. Bei einem längeren Stromausfall oder zum Betrieb weiterer Anlagenteile, die nicht über eine USV abgesichert sind bzw. nicht sinnvoll über die USV abgesichert werden können, sind Netzersatzanlagen erforderlich, die auch über längere Zeiträume ausreichend Strom bereitstellen können. Dies wird heutzutage üblicherweise mit Dieselaggregaten erreicht, die recht zuverlässig betrieben werden können, nur eines geringen Wartungsaufwands bedürfen und eine hohe Leistung bereitstellen. Zum Betrieb der Dieselaggregate ist ein entsprechender Kraftstoffvorrat vorgesehen, der bei längeren Ausfällen der allgemeinen Stromversorgung über Tanklastwagen aufgefüllt werden kann. Aufgrund steigender Anforderungen an die Zuverlässigkeit und die Kosten für den Betrieb von entsprechenden Netzersatzanlagen besteht jedoch ein wachsendes Interesse an in dieser Hinsicht verbesserten Netzersatzanlagen und Verfahren zu deren Betrieb. Die WO2007/097316A1 offenbart ein Verfahren zum Betrieb einer Notstromanlage.

Daher liegt der vorliegenden Erfindung die Aufgabe zugrunde, das Verfahren und die Netzersatzanlage der eingangs genannten und zuvor näher beschriebenen Art derart auszugestalten und weiterzubilden, dass die Zuverlässigkeit weiter gesteigert und die Kosten für den Betrieb von entsprechenden Netzersatzanlagen weiter gesenkt werden können.

Diese Aufgabe ist gemäß Anspruch 1 gelöst durch ein Verfahren zum Betrieb einer Netzersatzanlage zum Bereitstellen einer Notstromversorgung bei Ausfall der allgemeinen Stromversorgung, wobei die Netzersatzanlage einen Stromsensor zum Erfassen eines Ausfalls der allgemeinen Stromversorgung, einen Erdgasanschluss zum Anschluss an eine Erdgasleitung, einen mit dem Erdgasanschluss verbundenen Reformer zur Reformierung von Erdgas, eine mit dem Reformer verbundene Brennstoffzelle zur elektrochemischen Umsetzung von Wasserstoff aus dem im Reformer reformierten Erdgas und einen mit der Brennstoffzelle verbundenen Wechselrichter zum Bereitstellen einer Wechselspannung in einem mit Notstrom zu versorgenden elektrischen Stromkreis,
- bei dem der Stromsensor einen Ausfall der allgemeinen Stromversorgung erfasst,
- bei dem bei einem Ausfall der allgemeinen Stromversorgung der Reformer über den Erdgasanschluss mit Erdgas versorgt wird,
- bei dem das Erdgas im Reformer unter Bildung von Wasserstoff reformiert wird,
- bei dem der Wasserstoff in der Brennstoffzelle elektrochemisch verstromt wird,
- bei dem die Brennstoffzelle eine elektrische Spannung an den Wechselrichter abgibt und
- bei dem der Wechselrichter den mit Notstrom zu versorgenden elektrischen Stromkreis mit einer Wechselspannung versorgt.

Ferner wird die genannte Aufgabe gemäß Anspruch 8 gelöst durch eine Netzersatzanlage zum Bereitstellen einer Notstromversorgung bei Ausfall der allgemeinen Stromversorgung, insbesondere nach einem der Ansprüche 1 bis 7, mit einem Stromsensor zum Erfassen eines Ausfalls der allgemeinen Stromversorgung, einem Erdgasanschluss zum Anschluss der Netzersatzanlage an eine Erdgasleitung, einem mit dem Erdgasanschluss verbundenen Reformer zum Reformieren von Erdgas, einer mit dem Reformer verbundenen Brennstoffzelle zur elektrochemischen Verstromung von Wasserstoff aus dem im Reformer reformierten Erdgas und einem mit der Brennstoffzelle verbundenen Wechselrichter zum Versorgen eines mit Notstrom zu versorgenden elektrischen Stromkreises mit Wechselspannung.

Die Erfindung hat also erkannt, dass es zweckmäßig ist, das Erdgas eines Erdgasnetzes zur Notstromerzeugung mittels einer Brennstoffzelle zu nutzen, anstelle auf Dieselaggregate zurückzugreifen. Dabei überwacht ein Stromsensor die allgemeine Stromversorgung, etwa über ein öffentliches Stromnetz, um beim Ausfall der allgemeinen Stromversorgung die Notstromversorgung bewirken zu können. Bei einem Ausfall der allgemeinen Stromversorgung wird über den Erdgasanschluss Erdgas zum Reformer geleitet, der das Erdgas unter Bildung von Wasserstoff reformiert. Dabei handelt es sich insbesondere um eine an sich bekannte, auch als Dampfreformierung bezeichnete Umsetzung von Kohlenwasserstoffen zu Wasserstoff (H₂). Die Dampfreformierung ist eine endotherme Reaktion, bei der die benötigte Wärme der Reaktion zugeführt werden muss. Dies kann bedarfsweise durch eine elektrische Beheizung erfolgen, kann im Schwarzfall aber besonders zweckmäßig auch durch eine Erdgasfeuerung und/oder eine gleichzeitige partielle Oxidation des Erdgases im Sinne einer autothermen Verfahrensführung durchgeführt werden. Für Methan, den Hauptbestandteil von Erdgas, erfolgt diese Umsetzung entsprechend der nachfolgenden Reaktionsgleichungen:

CH₄ + H₂O → CO + 3 H₂

CO + H₂O → CO₂ + H₂

Der auf diese Weise im Reformer gebildete Wasserstoff wird anschließend in der Brennstoffzelle elektrochemisch verstromt, wobei unter Bildung von Wasser (H₂O) elektrischer Strom erzeugt wird.

2 H₂ + O₂ → 2 H₂O

Die elektrische Spannung der Brennstoffzelle wird über den Wechselrichter in Wechselspannung umgewandelt, die dann den angeschlossenen Stromkreis mit Strom versorgt.

Da Erdgasleitungen unter einem erhöhten Druck stehen und ein sehr großes Volumen umfassen, steht auch in dem Fall, dass infolge des Stromausfalls keine oder nur wenige Kompressoren des Erdgasnetzes weiteres Erdgas nachführen, der Druck des Erdgases auf sehr hohem Niveau, das ausreicht, die Netzersatzanlage zu betreiben. Dies gilt umso mehr, als dass im Falle eines Stromausfalls sich die allermeisten Verbraucher des Erdgasnetzes, die normalerweise Erdgas aus dem Erdgasnetz entnehmen würden, mangels Versorgungsspannung aus dem allgemeinen Stromnetz abschalten. Es wird so also eine sehr hohe Zuverlässigkeit der Netzersatzanlage erreicht. Damit ist es auch entbehrlich, im Falle eines Schwarzfalls einen zuverlässigen Nachschub an Diesel zum Betrieb von Dieselaggregaten über einen sehr langen Zeitraum aufrechtzuerhalten.

Des Weiteren besteht bei der Verwendung von Brennstoffzellen der Vorteil, dass diese keine beweglichen Teile aufweisen und keine Schmierstoffe benötigt werden. Beides kann nämlich zu einem Versagen von Dieselaggregaten führen, jedenfalls dann, wenn die Dieselaggregate nicht regelmäßig und umfassend gewartet werden.

Bei einer ersten besonders bevorzugten Ausgestaltung des Verfahrens wird der Wechselrichter bedarfsweise zur unterbrechungsfreien Stromversorgung wenigstens eines Teils des mit Notstrom zu versorgenden elektrischen Stromkreises mit einem Strom einer Unterbrechungsfreien Stromversorgung versorgt. **In** diesem Fall können nicht nur Synergien bei der Verwendung des Wechselrichters und somit eine Einsparung weiterer Wechselrichter erreicht werden. Es kann auf diese Weise auch eine Synchronisation der Betriebsspannung des von der Brennstoffzelle erzeugten Stroms auf beispielsweise 230 Volt erreicht werden.

Des Weiteren kann beispielsweise zum Beheizen von Anlagenteilen und/oder Betriebsgebäuden die bei der elektrochemischen Verstromung des Wasserstoffs in der Brennstoffzelle frei werdende Wärme von der Brennstoffzelle über einen Wärmetauscher an einen Heizkreislauf abgegeben werden. Der Heizkreislauf übernimmt im Falle eines allgemeinen Stromausfalls die Wärmeversorgung besonders relevanter Anlagenteile und Betriebsgebäude, beispielsweise zur Aufrechterhaltung einer Versorgung oder zur Wiederherstellung der allgemeinen Stromversorgung.

Damit ein schnelles Anfahren und eine hohe Zuverlässigkeit der Netzersatzanlage sichergestellt werden kann, bietet es sich an, wenn die elektrochemische Verstromung des Wasserstoffs in einer Niedertemperatur-Brennstoffzelle, insbesondere einer Polymerelektrolytmembran-Brennstoffzelle (PEM-Brennstoffzelle), durchgeführt wird. Diese arbeiten mit einer niedrigen Betriebstemperatur, etwa zwischen 70 und 90 °C, so dass diese Brennstoffzellen anders als sogenannte Hochtemperatur-Brennstoffzellen rasch ihre optimale Betriebstemperatur erreichen. Die PEM-Brennstoffzelle umfasst zwei Elektroden, die durch den Elektrolyt mit einer festen, ionendurchlässigen Polymermembran voneinander getrennt sind. Der an der Anode zugeführte Wasserstoff teilt sich in Elektronen und Protonen, wobei die freien Elektronen als elektrischer Strom durch einen äußeren Kreislauf wandern. Die Protonen treten dagegen durch die Polymerelektrolytmembran zur Kathode über, an der sich dann aus Luftsauerstoff unter Aufnahme der Protonen und der Elektronen Wärme und Wasser bilden.

Die beschriebenen Vorteile kommen insbesondere zum Tragen, wenn ein elektrischer Stromkreis einer Erdgas-Druckregel- und Messanlage (GDRMA) mit Notstrom versorgt wird. Diese Gasdruckregelanlage entnimmt typischerweise Erdgas aus dem Erdgashochdrucknetz und reduziert es auf Mitteldruck über eine ein- oder mehrstufige Gas-Druckreduzierung. Über eine zusätzliche Messanlage kann zusätzlich noch eine Gas-Mengenmessung vorgenommen werden. Entsprechende Erdgas-Druckregel- und Messanlagen müssen nämlich auch im Schwarzfall funktionstüchtig gehalten werden und/oder bieten sich im Schwarzfall als Standort für Betriebspersonal zur Aufrechterhaltung der Versorgung und/oder zur Wiederherstellung der allgemeinen Spannungsversorgung an. Alternativ oder zusätzlich bietet es sich an, wenn Erdgas über einen Erdgasanschluss einer Erdgas-Druckregel- und Messanlage aus einer Erdgasleitung entnommen wird, um das Erdgas dann dem der Brennstoffzelle vorgeschalteten Reformer zuzuführen. Auf diese Weise kann die Versorgung der Netzanlage mit Erdgas einfach sichergestellt werden.

Um einen zuverlässigen Betrieb der Netzersatzanlage sicherstellen zu können, bietet es sich alternativ oder zusätzlich auch an, wenn der Stromsensor bei einem Ausfall der allgemeinen Stromversorgung ein Steuersignal an eine Steuereinrichtung abgibt, so dass die Steuereinrichtung infolge des Steuersignals ein Öffnen eines Absperrorgans des Erdgasanschlusses über einen Antrieb, insbesondere einen magnetischen, elektrischen, pneumatischen und/oder hydraulischen Antrieb, bewirken kann. So wird sichergestellt, dass bei einem Schwarzfall dem der Brennstoffzelle vorgeschalteten Reformer sehr rasch Erdgas zugeführt wird.

Um eine Beschädigung, insbesondere eine Vergiftung der Brennstoffzelle durch Odorierungsmittel oder durch Reaktionsprodukte der Odorierungsmittel aus der Reformierung zu vermeiden, bietet es sich an, wenn das Erdgas vor der Brennstoffzelle, insbesondere vor dem Reformer, durch eine Gasreinigungseinrichtung wie einer Adsorptionseinrichtung, insbesondere durch eine Druckwechseladsorptionsanlage, geleitet wird. Auf diese Weise kann dann in der Gasreinigungseinrichtung, vorzugsweise der Adsorptionseinrichtung Odorierungsmittel aus dem Erdgas bzw. Reaktionsprodukte des Odorierungsmittels aus dem reformierten Erdgas abgeschieden werden. So lässt sich beispielsweise eine Vergiftung der Brennstoffzelle bzw. von Elektrodenkatalysatoren vermeiden, die sich infolge von üblicherweise schwefelhaltigen Odorierungsmitteln des Erdgases ergeben kann. Die Toleranz der Brennstoffzelle, auch der PEM-Brennstoffzelle, gegenüber solchen schwefelhaltigen Verbindungen, seien es die Odorierungsmittel selbst oder aber Reaktionsprodukte, die bei der Reformierung des Erdgases aus den Odorierungsmitteln gebildet werden, ist typsicherweise begrenzt.

Bei einer ersten besonders bevorzugten Ausgestaltung der Netzersatzanlage ist eine Unterbrechungsfreie Stromversorgung vorgesehen, die elektrisch mit dem Wechselrichter verbunden ist. So kann bedarfsweise auf einen zusätzlichen Wechselrichter zum Betrieb der Netzersatzanlage verzichtet werden. Es kann weiterhin im Schwarzfall wenigstens für einen Teil des mit Notstrom zu versorgenden Stromkreises eine Spannungsversorgung unterbrechungsfrei bereitgestellt werden. Nicht zuletzt kann so einfach eine Synchronisation des Notstroms auf die gewünschte Betriebsspannung, etwa von 230 Volt, erreicht werden.

Zur Beheizung relevanter Anlagenteile oder relevanter Betriebsgebäude kann es sich anbieten, wenn ein Wärmetauscher mit der Brennstoffzelle und mit einem Heizkreislauf zur Abgabe von Wärme der Brennstoffzelle an den Heizkreislauf verbunden ist. Dann kann die Abwärme der Brennstoffzelle effektiv und gewinnbringend genutzt werden.

Wenn als Brennstoffzelle eine Niedertemperatur-Brennstoffzelle, insbesondere eine Polymerelektrolytmembran-Brennstoffzelle (PEM-Brennstoffzelle) verwendet wird, können die Anfahrzeiten reduziert und die Zuverlässigkeit gesteigert werden. Diese Brennstoffzellen sind auch sehr resistent hinsichtlich des zugeführten Brenngases. Hier können insbesondere Odorierungsmittel zu Problemen, insbesondere zur Vergiftung der Brennstoffzelle bzw. von Elektrodenkatalysatoren führen. Dies resultiert insbesondere daher, dass es sich bei üblichen Odorierungsmitteln von Erdgas um schwefelhaltige Verbindungen handelt und die Toleranz der Brennstoffzelle gegenüber solchen schwefelhaltigen Verbindungen begrenzt ist.

Um eine Beschädigung der Brennstoffzelle zu vermeiden, kann es zweckmäßig sein, dem Reformer eine Gasreinigungseinrichtung wie eine Adsorbereinrichtung zur Abscheidung von Odorierungsmittel aus dem Erdgas vorzuschalten. Bei der Adsorbereinrichtung kann es sich um eine solche enthaltend Aktivkohle, Silikate, Zeolithe und/oder Molekularsiebe als Adsorbens handeln. Insbesondere kommen Druckwechseladsorptionsanlagen (Pressure-Swing-Adsorption Plants; PSA-Anlagen) in Frage. Die Gasreinigungseinrichtung, insbesondere die Adsorptionseinrichtung, kann aber auch vor der Brennstoffzelle angeordnet werden, um bei der Reformierung des Erdgases aus den Odorierungsmitteln gebildete Reaktionsprodukte abzuscheiden.

Wenn eine mit dem Stromsensor verbundene Steuereinrichtung zum Empfangen eines Steuersignals vom Stromsensor bei einem Ausfall der allgemeinen Stromversorgung vorgesehen ist, kann die Netzersatzanlage gezielt und rasch angefahren werden, um eine unnötige Unterbrechung der Spannungsversorgung des mit Notstrom zu versorgenden Stromkreises zu vermeiden. Dabei bietet es sich dann insbesondere an, wenn ein Antrieb, insbesondere ein magnetischer, elektrischer, pneumatischer und/oder hydraulischer Antrieb, zum Öffnen eines Absperrorgans des Erdgasanschlusses vorgesehen ist. Dann kann eine möglichst unmittelbare Versorgung der Brennstoffzelle mit Wasserstoff bereitgestellt werden und die Netzersatzanlage rasch angefahren werden.

Im Übrigen kommen die genannten Vorteile dann in besonderem Maße bei einer Erdgas-Druckregel- und Messanlage (GDRMA) mit einer Netzersatzanlage zum Bereitstellen einer Notstromversorgung zum Tragen nach einem der Ansprüche 8 bis 13.

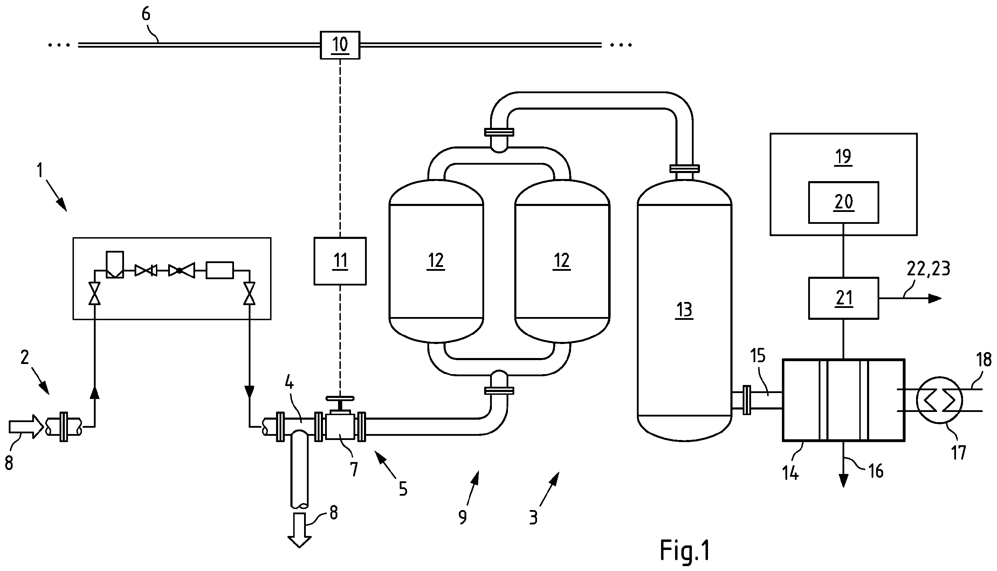

Nachfolgend wird die Erfindung anhand einer lediglich ein Ausführungsbeispiel darstellenden Zeichnung näher erläutert. In der Zeichnung zeigt
- Fig. 1: eine Netzersatzanlage einer Erdgas-Druckregel- und Messanlage in einem schematischen Verfahrensfließbild.

In der Fig. 1 ist schematisch eine Erdgas-Druckregel- und Messanlage (GDRMA) 1 eines Erdgasnetzes 2 mit einer Netzersatzanlage 3 dargestellt. In der Erdgasleitung 4 der eigentlichen Erdgas-Druckregel- und Messanlage 1 ist ein Erdgasanschluss 5 vorgesehen, der im Schwarzfall, also bei Ausfall der allgemeinen Stromversorgung über das öffentliche Stromnetz 6, ein in der Erdgasleitung 4 angeordnetes Stellventil 7 mit Erdgas 8 versorgen kann. Das Stellventil 7 umfasst einen Antrieb zum Stellen des Stellventils 7 in die Normalstellung oder in die Notfallstellung. In der Notfallstellung wird wenigstens ein Teil des Erdgases 8 aus dem Erdgasnetz 2 abgezweigt und einer Gasreinigungseinrichtung in Form einer Adsorptionseinrichtung 9 zugeleitet. Ob ein Schwarzfall vorliegt, wird über einen Stromsensor 10 ermittelt, der mit dem öffentlichen Stromnetz 6 verbunden ist und einen allgemeinen Stromausfall im Stromnetz 6 erkennen kann. Ist dies der Fall, gibt der Stromsensor 10 ein Steuersignal an eine Steuereinrichtung 11 ab, die dafür sorgt, dass das Stellventil 7 des Erdgasanschlusses 5 aktiviert und der Erdgasanschluss 5 der Netzersatzanlage 3 mit Erdgas 8 versorgt wird.

Das Erdgas 8 strömt bei der dargestellten und insoweit bevorzugten Netzersatzanlage 3 vom Erdgasanschluss 5 in die Adsorptionseinrichtung 9 in Form einer Druckwechseladsorptionsanlage. Diese umfasst vorliegend wenigstens zwei mit Adsorbens gefüllte Adsorber 12, die wechselseitig und mit wechselnden Drücken betrieben werden. Die Verfahrensführung von Adsorptionseinrichtung im Allgemeinen und Druckwechseladsorptionsanlagen im Speziellen ist grundsätzlich seit geraumer Zeit bekannt und bedarf daher vorliegend keiner eingehenderen Erläuterung. In der Adsorptionseinrichtung 9 werden die Odorierungsmittel des Erdgases 8, bei denen es sich insbesondere um schwefelhaltige Verbindungen handelt, abgeschieden. Alternativ könnte die Adsorptionseinrichtung 9 auch zwischen einem Reformer 13 und einer Brennstoffzelle 14 der Netzersatzanlage 3 angeordnet sein, um die Reaktionsprodukte von der Reformierung der Odorierungsmittel abzuschneiden, so dass deren Eintritt in die Brennstoffzelle 14 verhindert wird.

Im Reformer 13 wird das Erdgas 8, insbesondere im Wege einer sogenannten Dampfreformierung, bei der unter Umsetzung von Wasser im Wesentlichen Kohlendioxid (CO₂) und Wasserstoff (H₂) gebildet wird. Das reformierte Erdgas 15 wird bei der dargestellten und insoweit bevorzugten Netzersatzanlage 3 der Brennstoffzelle 14 in Form einer Polymerelektrolyt-Brennstoffzelle (PEM-Brennstoffzelle) zugeführt, in der der Wasserstoff elektrochemisch verstromt wird. Dabei entsteht Wasser 16, das der Dampfreformierung im Reformer 13 zugeführt werden kann, um den Wasserbedarf zu minimieren. Des Weiteren wird bei der elektrochemischen Verstromung von Wasserstoff in der Brennstoffzelle 14 Wärme frei, die über einen Wärmetauscher 17 in einen Heizkreislauf 18 abgegeben wird, der beispielsweise der Beheizung von Anlagenteilen, Betriebsgebäuden und/oder der Beheizung des Reformers 13 dient.

In einem Schwarzfall dauert es eine gewisse Zeit, bis die Brennstoffzelle 14 angefahren ist und ihre Betriebstemperatur erreicht hat. Um trotzdem eine unterbrechungsfreie Stromversorgung, wenigstens für besonders relevante Verbraucher, wie Server und Computer aufrechterhalten zu können, ist eine an sich bekannte Unterbrechungsfreie Stromversorgung (USV) 19 vorgesehen, die Akkumulatoren 20 oder Batterien aufweist, welche unmittelbar bei einem Spannungsabfall im öffentlichen Stromnetz 6 Strom abgeben, der über einen Wechselrichter 21 auf Wechselspannung, etwa einer Betriebsspannung von 230 Volt, umgewandelt wird. Bei der dargestellten Netzersatzanlage 3 wird dieser Wechselrichter 21 gleichfalls dazu genutzt die von der Brennstoffzelle 14 abgegebene Gleichspannung in Wechselspannung, etwa einer Betriebsspannung von 230 Volt, umzuwandeln.

Bei der dargestellten und insoweit bevorzugten Netzersatzanlage 3 wird von der Netzersatzanlage 3 ein mit Notstrom zu versorgender Stromkreis 22 versorgt, der einen kleineren Stromkreis 23 umfasst, der von der USV unterbrechungsfrei mit Strom versorgt wird. Mit anderen Worten müssen weniger Anlagenteile von der USV 19 unterbrechungsfrei mit Notstrom vorsorgt werden als von der Netzersatzanlage 3 mit Notstrom versorgt werden sollen, der über die Brennstoffzelle 14 erzeugt wird.

### Bezugszeichenliste

- 1: Erdgas-Druckregel- und Messanlage
- 2: Erdgasnetz
- 3: Netzersatzanlage
- 4: Erdgasleitung
- 5: Erdgasanschluss
- 6: Stromnetz
- 7: Stellventil
- 8: Erdgas
- 9: Adsorptionseinrichtung
- 10: Stromsensor
- 11: Steuereinrichtung
- 12: Adsorber
- 13: Reformer
- 14: Brennstoffzelle
- 15: reformiertes Erdgas
- 16: Wasser
- 17: Wärmetauscher
- 18: Heizkreislauf
- 19: Unterbrechungsfreie Stromversorgung (USV)
- 20: Akkumulatoren
- 21: Wechselrichter
- 22: mit Notstrom zu versorgender Stromkreis
- 23: unterbrechungsfrei mit Strom zu versorgender Stromkreis

## Patentansprüche

1. Verfahren zum Betrieb einer Netzersatzanlage (3) zum Bereitstellen einer Notstromversorgung bei Ausfall der allgemeinen Stromversorgung, wobei die Netzersatzanlage (3) einen Stromsensor (10) zum Erfassen eines Ausfalls der allgemeinen Stromversorgung, einen Erdgasanschluss (5) zum Anschluss an eine Erdgasleitung (4), einen mit dem Erdgasanschluss (5) verbundenen Reformer (13) zur Reformierung von Erdgas (8), eine mit dem Reformer (13) verbundene Brennstoffzelle (14) zur elektrochemischen Umsetzung von Wasserstoff aus dem im Reformer (13) reformierten Erdgas und einen mit der Brennstoffzelle (14) verbundenen Wechselrichter (21) zum Bereitstellen einer Wechselspannung in einem mit Notstrom zu versorgenden elektrischen Stromkreis (22),
- bei dem der Stromsensor (10) einen Ausfall der allgemeinen Stromversorgung erfasst,
- bei dem bei einem Ausfall der allgemeinen Stromversorgung der Reformer (13) über den Erdgasabschluss (5) mit Erdgas (8) versorgt wird,
- bei dem das Erdgas (8) im Reformer (13) unter Bildung von Wasserstoff reformiert wird,
- bei dem der Wasserstoff in der Brennstoffzelle (14) elektrochemisch verstromt wird,
- bei dem die Brennstoffzelle (14) eine elektrische Spannung an den Wechselrichter (21) abgibt und
- bei dem der Wechselrichter (21) den mit Notstrom zu versorgenden elektrischen Stromkreis (22) mit einer Wechselspannung versorgt.

2. Verfahren nach Anspruch 1,
bei dem der Wechselrichter (21) bedarfsweise zur unterbrechungsfreien Stromversorgung (19) wenigstens eines Teils des mit Notstrom zu versorgenden elektrischen Stromkreises (22) mit einem Strom einer Unterbrechungsfreien Stromversorgung (USV) (19) versorgt wird.

3. Verfahren nach Anspruch 1 oder 2,
bei dem die bei der elektrochemischen Verstromung des Wasserstoffs in der Brennstoffzelle (14) frei werdende Wärme von der Brennstoffzelle (14) über einen Wärmetauscher (17) an einen Heizkreislauf (18) abgegeben wird.

4. Verfahren nach einem der Ansprüche 1 bis 3,
bei dem die elektrochemische Verstromung des Wasserstoffs in einer Niedertemperatur-Brennstoffzelle (14), insbesondere einer Polymerelektrolytmembran-(PEM)-Brennstoffzelle, durchgeführt wird.

5. Verfahren nach einem der Ansprüche 1 bis 4,
- bei dem ein elektrischer Stromkreis (22) einer Erdgas-Druckregel- und Messanlage (GDRMA) (1) mit Notstrom versorgt wird und/oder
- bei dem Erdgas (8) über einen Erdgasanschluss (5) einer Erdgas-Druckregel- und Messanlage (GDRMA) (1) aus einer Erdgasleitung (3) entnommen wird.

6. Verfahren nach einem der Ansprüche 1 bis 5,
- bei dem der Stromsensor (10) bei einem Ausfall der allgemeinen Stromversorgung ein Steuersignal an eine Steuereinrichtung (11) abgibt und
- bei dem die Steuereinrichtung (11) infolge des Steuersignals ein Öffnen eines Absperrorgans, insbesondere Stellventils (7) des Erdgasanschlusses (5) über einen Antrieb, insbesondere einen magnetischen, elektrischen, pneumatischen und/oder hydraulischen Antrieb, bewirkt.

7. Verfahren nach einem der Ansprüche 1 bis 6,
- bei dem das Erdgas (8) vor der Brennstoffzelle (14), insbesondere vor dem Reformer (13), durch eine Adsorptionseinrichtung (9), insbesondere durch eine Druckwechseladsorptionsanlage, geleitet wird und
- bei der in der Adsorptionseinrichtung (9) Odorierungsmittel aus dem Erdgas (8) oder Reaktionsprodukte aus dem reformierten Erdgas (15) abgeschieden werden.

8. Netzersatzanlage (3) zum Bereitstellen einer Notstromversorgung bei Ausfall der allgemeinen Stromversorgung, insbesondere nach einem der Ansprüche 1 bis 7, mit einem Stromsensor (10) zum Erfassen eines Ausfalls der allgemeinen Stromversorgung, einem Erdgasanschluss (5) zum Anschluss der Netzersatzanlage (3) an eine Erdgasleitung (4), einem mit dem Erdgasanschluss (5) verbundenen Reformer (13) zum Reformieren von Erdgas (8), einer mit dem Reformer (13) verbundenen Brennstoffzelle (14) zur elektrochemischen Verstromung von Wasserstoff aus dem im Reformer (13) reformierten Erdgas (15) und einem mit der Brennstoffzelle (14) verbundenen Wechselrichter (21) zum Versorgen eines mit Notstrom zu versorgenden elektrischen Stromkreises (22) mit Wechselspannung.

9. Netzersatzanlage nach Anspruch 8,
**dadurch gekennzeichnet, dass**
eine Unterbrechungsfreie Stromversorgung (USV) (19) vorgesehen und elektrisch mit dem Wechselrichter (21) verbunden ist.

10. Netzersatzanlage nach Anspruch 8 oder 9,
**dadurch gekennzeichnet, dass**
ein Wärmetauscher (17) mit der Brennstoffzelle (14) und mit einem Heizkreislauf (18) zur Abgabe von Wärme der Brennstoffzelle (14) an den Heizkreislauf (18) verbunden ist.

11. Netzersatzanlage nach einem der Ansprüche 8 bis 10,
**dadurch gekennzeichnet, dass**
die Brennstoffzelle (14) eine Niedertemperatur-Brennstoffzelle, insbesondere eine Polymerelektrolyt-(PEM)-Brennstoffzelle, ist.

12. Netzersatzanlage nach einem der Ansprüche 8 bis 11,
**dadurch gekennzeichnet, dass**
der Brennstoffzelle (14), insbesondere dem Reformer (13), eine Adsorptionseinrichtung (9), insbesondere eine Druckwechseladsorptionsanlage, zur Abscheidung von Odorierungsmittel aus dem Erdgas (8) oder Reaktionsprodukte aus dem reformierten Erdgas (15) vorgeschaltet ist.

13. Netzersatzanlage nach einem der Ansprüche 8 bis 12,
**dadurch gekennzeichnet, dass**
eine mit dem Stromsensor (10) verbundene Steuereinrichtung (11) zum Empfangen eines Steuersignals vom Stromsensor (10) bei einem Ausfall der allgemeinen Stromversorgung vorgesehen ist und dass, vorzugsweise, ein Antrieb, insbesondere ein magnetischer, elektrischer, pneumatischer und/oder hydraulischer Antrieb, zum Öffnen eines Absperrorgans, insbesondere Stellventils (7) des Erdgasanschlusses (5) vorgesehen ist.

14. Erdgas-Druckregel- und Messanlage (GDRMA) (1) mit einer Netzersatzanlage (3) nach einem der Ansprüche 8 bis 13, zum Bereitstellen einer Notstromversorgung.

## Claims

1. Method for operating a mains replacement arrangement (3) for providing an emergency power supply in case of a failure of the mains power supply, wherein the mains replacement arrangement (3) comprises a current sensor (10) for detecting a failure of the mains power supply, a natural gas connection (5) for connection to a natural gas pipeline (4), a reformer (13) connected to the natural gas connection (5) for reforming natural gas (8), a fuel cell (14) connected to the reformer (13) for an electrochemical conversion of hydrogen from the natural gas reformed in the reformer (13), and an inverter (21) connected to the fuel cell (14) for supplying an alternating voltage to an electrical circuit (22) to be supplied with emergency power,
- in which the current sensor (10) detects a failure of the mains power supply,
- wherein, in case of a failure of the mains power supply, the reformer (13) is supplied with natural gas (8) via the natural gas connection (5),
- wherein the natural gas (8) is reformed in the reformer (13) to form hydrogen,
- wherein the hydrogen is electrochemically converted into electricity in the fuel cell (14),
- wherein the fuel cell (14) supplies an electrical voltage to the inverter (21), and
- wherein the inverter (21) supplies the electrical circuit (22) to be supplied with emergency power with an alternating voltage.

2. Method according to claim 1,
in which the inverter (21) is supplied with a current from an uninterruptible power supply (UPS) (19) depending on requirements for an uninterrupted power supply (19) of at least part of the electrical circuit (22) to be supplied with emergency power.

3. Method according to claim 1 or 2,
in which the heat released during the electrochemical conversion of hydrogen into electricity in the fuel cell (14) is transferred from the fuel cell (14) to a heating circuit (18) via a heat exchanger (17).

4. Method according to one of claims 1 to 3,
in which the electrochemical conversion of hydrogen into electricity is carried out in a low-temperature fuel cell (14), in particular a polymer electrolyte membrane (PEM) fuel cell.

5. Method according to one of claims 1 to 4,
- in which an electrical circuit (22) of a natural gas pressure regulating and measuring system (GDRMA) (1) is supplied with emergency power and/or
- in which natural gas (8) is taken from a natural gas pipeline (3) via a natural gas connection (5) of a natural gas pressure regulating and metering station (GDRMA) (1).

6. Method according to one of claims 1 to 5,
- in which the current sensor (10) emits a control signal to a control device (11) in case of a failure of the mains power supply and
- in which the control device (11) causes a shut-off device, in particular a control valve (7) of the natural gas connection (5), to be opened via a drive, in particular a magnetic, electrical, pneumatic and/or hydraulic drive, based on the control signal.

7. Method according to one of claims 1 to 6,
- in which the natural gas (8) is passed through an adsorption device (9), in particular a pressure swing adsorption plant, upstream of the fuel cell (14), in particular upstream of the reformer (13), and
- in which odourants from the natural gas (8) or reaction products from the reformed natural gas (15) are separated in the adsorption device (9).

8. Mains replacement arrangement (3) for providing an emergency power supply in case of a failure of the mains power supply, in particular according to one of claims 1 to 7, with a current sensor (10) for detecting a failure of the mains power supply, a natural gas connection (5) for connecting the mains replacement arrangement (3) to a natural gas pipeline (4), a reformer (13) connected to the natural gas connection (5) for reforming natural gas (8), a fuel cell (14) connected to the reformer (13) for the electrochemical conversion of hydrogen from the natural gas (15) reformed in the reformer (13), and an inverter (21) connected to the fuel cell (14) for supplying an electrical circuit (22) to be supplied with emergency power with alternating voltage.

9. Mains replacement arrangement according to claim 8,
**characterised in that**
an uninterruptible power supply (UPS) (19) is provided and is electrically connected to the inverter (21).

10. Mains replacement arrangement according to claim 8 or 9,
**characterised in that**
a heat exchanger (17) is connected to the fuel cell (14) and to a heating circuit (18) for transferring heat from the fuel cell (14) to the heating circuit (18).

11. Mains replacement arrangement according to any of claims 8 to 10,
**characterised in that**
the fuel cell (14) is a low-temperature fuel cell, in particular a polymer electrolyte membrane (PEM) fuel cell.

12. Mains replacement arrangement according to one of claims 8 to 11,
**characterised in that**
the fuel cell (14), in particular the reformer (13), is preceded by an adsorption device (9), in particular a pressure swing adsorption system, for separating odourants from the natural gas (8) or reaction products from the reformed natural gas (15).

13. Mains replacement arrangement according to one of claims 8 to 12,
**characterised in that**
a control device (11) connected to the current sensor (10) is provided for receiving a control signal from the current sensor (10) in case of a failure of the mains power supply, and that, preferably, a drive, in particular a magnetic, electric, pneumatic and/or hydraulic drive, is provided for opening a shut-off device, in particular a control valve (7) of the natural gas connection (5).

14. Natural gas pressure regulating and measuring system (GDRMA) (1) with a mains replacement arrangement (3) according to one of claims 8 to 13, for providing an emergency power supply.

## Revendications

1. Procédé pour exploiter une installation de remplacement de réseau (3) afin de fournir une alimentation électrique de secours en cas de panne de l'alimentation électrique générale, où l'installation de remplacement de réseau (3) comprend un capteur de courant (10) pour détecter une panne de l'alimentation électrique générale, un raccordement au gaz naturel (5) pour un raccordement à une conduite de gaz naturel (4), un reformeur (13) relié au raccordement au gaz naturel (5) pour reformer le gaz naturel (8), une pile à combustible (14) reliée au reformeur (13) pour convertir électrochimiquement de l'hydrogène issu du gaz naturel reformé dans le reformeur (13) et un onduleur (21) relié à la pile à combustible (14) pour fournir une tension alternative dans un circuit électrique (22) à être alimenté en courant de secours,
- dans lequel le capteur de courant (10) détecte une panne de l'alimentation électrique générale,
- dans lequel, en cas de panne de l'alimentation électrique générale, le reformeur (13) est alimenté en gaz naturel (8) via le raccordement de gaz naturel (5),
- dans lequel le gaz naturel (8) est reformé dans le reformeur (13) pour former de l'hydrogène,
- dans lequel l'hydrogène est converti en électricité électrochimiquement dans la pile à combustible (14),
- dans lequel la pile à combustible (14) délivre une tension électrique à l'onduleur (21) et
- dans lequel l'onduleur (21) alimente le circuit électrique (22) à alimenter en courant de secours avec une tension alternative.

2. Procédé selon la revendication 1,
dans lequel l'onduleur (21) est alimenté, en cas de besoin, par une alimentation sans coupure (19) d'au moins une partie du circuit électrique (22) à alimenter en courant de secours avec un courant provenant d'une alimentation sans coupure (UPS) (19).

3. Procédé selon la revendication 1 ou 2,
dans lequel la chaleur libérée lors de la conversion électrochimique de l'hydrogène en électricité dans la pile à combustible (14) est transférée de la pile à combustible (14) à un circuit de chauffage (18) via un échangeur de chaleur (17).

4. Procédé selon l'une des revendications 1 à 3,
dans lequel la conversion électrochimique de l'hydrogène en électricité est effectuée dans une pile à combustible à basse température (14), en particulier une pile à combustible à membrane électrolytique polymère (PEM).

5. Procédé selon l'une des revendications 1 à 4,
- dans lequel un circuit électrique (22) d'une installation de régulation et de mesure de la pression du gaz naturel (GDRMA) (1) est alimenté en courant de secours et/ou
- dans lequel du gaz naturel (8) est prélevé d'une conduite de gaz naturel (3) via un raccordement de gaz naturel (5) d'une installation de régulation et de mesure de pression de gaz naturel (GDRMA) (1).

6. Procédé selon l'une des revendications 1 à 5,
- dans lequel le capteur de courant (10) émet un signal de commande à un dispositif de commande (11) en cas de panne de l'alimentation électrique générale et
- dans lequel le dispositif de commande (11), à la suite du signal de commande, provoque une ouverture d'un organe d'arrêt, en particulier d'une vanne de régulation (7) du raccordement au gaz naturel (5), via un entraînement, en particulier un entraînement magnétique, électrique, pneumatique et/ou hydraulique.

7. Procédé selon l'une des revendications 1 à 6,
- dans lequel le gaz naturel (8) est acheminé en amont de la pile à combustible (14), en particulier en amont du reformeur (13), à travers un dispositif d'adsorption (9), en particulier à travers une installation d'adsorption à pression alternée, et
- dans lequel des agents d'odorisation provenant du gaz naturel (8) ou des produits de réaction provenant du gaz naturel reformé (15) sont séparés dans le dispositif d'adsorption (9).

8. Installation de remplacement de réseau (3) pour fournir une alimentation électrique de secours en cas de panne de l'alimentation électrique générale, en particulier selon l'une des revendications 1 à 7, avec un capteur de courant (10) pour détecter une panne de l'alimentation électrique générale, un raccordement au gaz naturel (5) pour raccorder l'installation de remplacement de réseau (3) à une conduite de gaz naturel (4), un reformeur (13) relié au raccordement au gaz naturel (5) pour reformer le gaz naturel (8), une pile à combustible (14) reliée au reformeur (13) pour convertir électrochimiquement en électricité de l'hydrogène provenant du gaz naturel reformé dans le reformeur (13) (15) et un onduleur (21) relié à la pile à combustible (14) pour alimenter en tension alternative un circuit électrique (22) à être alimenté en courant de secours.

9. Installation de remplacement de réseau selon la revendication 8,
**caractérisé en ce qu'**
une alimentation sans coupure (UPS) (19) est prévue et est reliée électriquement à l'onduleur (21).

10. Installation de remplacement de réseau selon la revendication 8 ou 9,
**caractérisé en ce qu'**
un échangeur de chaleur (17) est relié à la pile à combustible (14) et à un circuit de chauffage (18) pour transférer la chaleur de la pile à combustible (14) au circuit de chauffage (18).

11. Installation de remplacement de réseau selon l'une des revendications 8 à 10,
**caractérisée en ce que**
la pile à combustible (14) est une pile à combustible à basse température, en particulier une pile à combustible à électrolyte polymère (PEM).

12. Installation de remplacement de réseau selon l'une des revendications 8 à 11,
**caractérisée en ce que**
la pile à combustible (14), en particulier le reformeur (13), est précédée d'un dispositif d'adsorption (9), en particulier d'une installation d'adsorption à pression alternée, pour séparer l'odorant du gaz naturel (8) ou les produits de réaction du gaz naturel reformé (15).

13. Installation de remplacement de réseau selon l'une des revendications 8 à 12,
**caractérisée en ce que**
un dispositif de commande (11) relié au capteur de courant (10) est prévu pour recevoir un signal de commande du capteur de courant (10) en cas de panne de l'alimentation électrique générale et que, de préférence, un entraînement, en particulier un entraînement magnétique, électrique, pneumatique et/ou hydraulique, est prévu pour ouvrir un organe d'arrêt, en particulier une vanne de régulation (7) du raccordement au gaz naturel (5).

14. Installation de régulation et de mesure de la pression du gaz naturel (GDRMA) (1) avec une installation de remplacement de réseau (3) selon l'une des revendications 8 à 13, pour fournir une alimentation électrique de secours.
